# EUROPÄISCHE PATENTANMELDUNG

(11) **EP 2 096 324 A1**
(43) Veröffentlichungstag der Anmeldung: **02.09.2009**
(21) Anmeldenummer: 08003493.7
(22) Anmeldetag: 26.02.2008
(51) Int. Cl.: F16C 13/02

(54) **Walzenlageranordnung**

(71) Anmelder: Oskar Dilo Maschinenfabrik KG, 69412 Eberbach (DE)
(72) Erfinder: Leger, Joachim, Dr., 69412 Eberbach (DE)
(74) Vertreter: Wächter, Jochen

(57) **Zusammenfassung**

Bei der Walzenlageranordnung weist die Walze (22) an einem ersten Walzenende ein sich in Richtung der Walzenachse weiter als der Walzenkörper erstreckendes Verbindungselement, vorzugsweise einen Walzenzapfen oder einen Rotor (19) eines Torquemotors, auf, das fest mit dem Walzenkörper verbunden ist. Außerdem ist das Verbindungselement (19) in einem Buchsenelement (16), vorzugsweise einer Lagerbuchse oder einem buchsenförmigen Stator eines Torquemotors, drehbar gelagert, das mit einem Maschinengestell (2) verbunden ist. Die Walzenlageranordnung weist auch ein stabiles, aber in gewissem Umfang elastisches Element mit einer Mittelöffnung auf, das an ersten Befestigungspunkten (8) fest mit dem Maschinengestell (2) und an zweiten Befestigungspunkten (12) fest mit dem Buchsenelement (16) derart verbunden ist, dass es eine gewisse Beweglichkeit zwischen dem Buchsenelement (16) und dem Maschinengestell (2) bewirkt.

## Beschreibung

Die Erfindung betrifft eine Walzenlageranordnung zur drehbaren Lagerung einer Walze.

In vielen Arbeitsmaschinen, die Walzen enthalten, muss eine gleichmäßige Flächenpressung zwischen Walzenoberflächen sichergestellt werden, beispielsweise in Druckmaschinen oder Walzwerken. In Kalandern müssen die Walzenabstände konstant gehalten werden. Bei Krempeln betragen die Abstände von bestimmten Arbeitswalzen und Trommeln teilweise nur Bruchteile von Millimetern zueinander.

Ganz besonderes Interesse erlangen Walzen unterschiedlichster Durchmesser auch in anderen Anlagen, in denen bahnförmiges Material zu transportieren und zu verarbeiten ist, insbesondere in Vlieslegern. Solche Walzen werden mitunter mit hohen Drehzahlen betrieben, was es erforderlich macht, dass die Walzen rund laufen. Dieses hat eine sehr präzise Bearbeitung der Walze auf der Drehbank zur Vorraussetzung.

Allerdings ist es aufgrund des Gewichts der Walzen und der beim Betrieb oder beim Transport des Geräts auftretenden Schwingungen äußerst kritisch, die Walzen passgenau zu lagern, ohne dabei Nachteile aufgrund der enormen Kraftausübung auf die Lager bzw. auf Verbindungsteile, beispielsweise zwischen Walzenzapfen und Walzenkörper, auf sich zu nehmen. Ein zusätzlicher Faktor ist bei besonders breiten Walzen die unvermeidliche Durchsenkung derselben.

Es ist daher die Aufgabe der vorliegenden Erfindung, eine Walzenlageranordnung zu schaffen, die selbst bei besonders breiten Walzen eine äußerst langlebige und sowohl für den Betrieb als auch den Transport geeignete Lagerung der Walzen gewährleistet und gleichzeitig eine äußerst exakte Positionierung der Walzen zulässt.

Diese Aufgabe wird durch die Merkmale des Anspruchs 1 gelöst.

Erfindungsgemäß weist bei der Walzenlageranordnung die Walze an einem ersten Walzenende ein sich in Richtung der Walzenachse weiter als der Walzenkörper erstreckendes Verbindungselement, vorzugsweise einen Walzenzapfen oder einen Rotor eines Torquemotors, auf, das fest mit dem Walzenkörper verbunden ist. Dabei ist das Verbindungselement in einem Buchsenelement, vorzugsweise einer Lagerbuchse oder einem buchsenförmigen Stator eines Torquemotors, drehbar gelagert, das mit einem Maschinengestell verbunden ist. Die Walzenlageranordnung weist außerdem ein stabiles, aber in gewissem Umfang elastisches Element mit einer Mittelöffnung auf, das an ersten Befestigungspunkten fest mit dem Maschinengestell und an zweiten Befestigungspunkten fest mit dem Buchsenelement derart verbunden ist, dass es eine gewisse Beweglichkeit zwischen dem Buchsenelement und dem Maschinengestell bewirkt.

Dadurch wird die exakte Lagerung der Walze gewährleistet, wobei gleichzeitig für die Langlebigkeit und Widerstandsfähigkeit der Anordnung auch bei längerem Betrieb sowie bei Transport gesorgt ist.

In einer mechanisch besonders vorteilhaften Ausführungsform ist das elastische Element ein vorzugsweise ringförmiges Plattenelement und die Anordnung weist außerdem ein mit dem Buchsenelement fest verbundenes, im Wesentlichen starres Kragenelement auf, das plattenförmig ausgebildet ist und eine Mittelöffnung aufweist.

Hierbei ist es von Vorteil, wenn die Anordnung zwei erste Befestigungspunkte aufweist, die sich im Wesentlichen gegenüberliegen, sowie zwei zweite Befestigungspunkte, die sich ebenfalls im Wesentlichen gegenüberliegen, wobei eine gedachte Verbindungslinie der ersten Befestigungspunkte einen rechten Winkel mit einer gedachten Verbindungslinie der zweiten Befestigungspunkte einschließt. Dadurch ist eine Entkopplung der auf die Lageranordnung wirkenden Kräfte möglich.

Zur Befestigung des Plattenelements am Maschinengestell weist das Maschinengestell eine Öffnung auf, in die zwei gegenüberliegende Vorsprünge hineinragen, in deren Bereich die ersten Befestigungspunkte angeordnet sind.

Der Außendurchmesser des Kragenelements ist dabei vorzugsweise kleiner als der Außendurchmesser des ringförmigen Plattenelements, und das Kragenelement weist zwei nach außen abragende Zungen auf, in deren Bereich die zweiten Befestigungspunkte angeordnet sind. Somit ist eine mechanisch einfache und für vielseitige Einsatzzwecke verwendbare Umsetzung des erfinderischen Gedankens gewährleistet.

In dieser Anordnung besteht das Plattenelement vorteilhafterweise aus einem dünnen Blech, aus Kohlefaser oder aus Kunststoff, während das Kragenelement aus einem dicken Blech besteht.

Ebenso ist es möglich, dass das Kragenelement als elastisches Element ausgebildet ist, während das Plattenelement vorzugsweise starr ist.

Eine besonders vorteilhafte Anwendung ergibt sich, wenn die Walze eine Hohlwalze aus mit Kohlefaser verstärktem Kunststoff ist.

Am zweiten Walzenende kann entweder eine identische Lagerung eines Walzenzapfens oder eines Rotors eines Torquemotors angeordnet sein. Alternativ kann ein sich dort weiter als der Walzenkörper erstreckende Walzenzapfen in einem zweiten Lager drehbar gelagert sein, das vorzugsweise als sphärisches Lager oder Gelenklager ausgebildet ist. Hierdurch wird eine mehr oder weniger schwimmende Lagerung der Walze ermöglicht.

Weitere Einzelheiten, Vorteile und Merkmale der vorliegenden Erfindung ergeben sich aus der nachfolgenden detaillierten Beschreibung unter Bezugnahme auf die Zeichnung.
- Fig. 1: zeigt eine Seitenansicht einer erfindungsgemäßen Walzenlageranordnung; und
- Fig. 2: zeigt einen Sektorschnitt durch diese Walzenlageranordnung entlang der Linie A - A in Fig. 1.

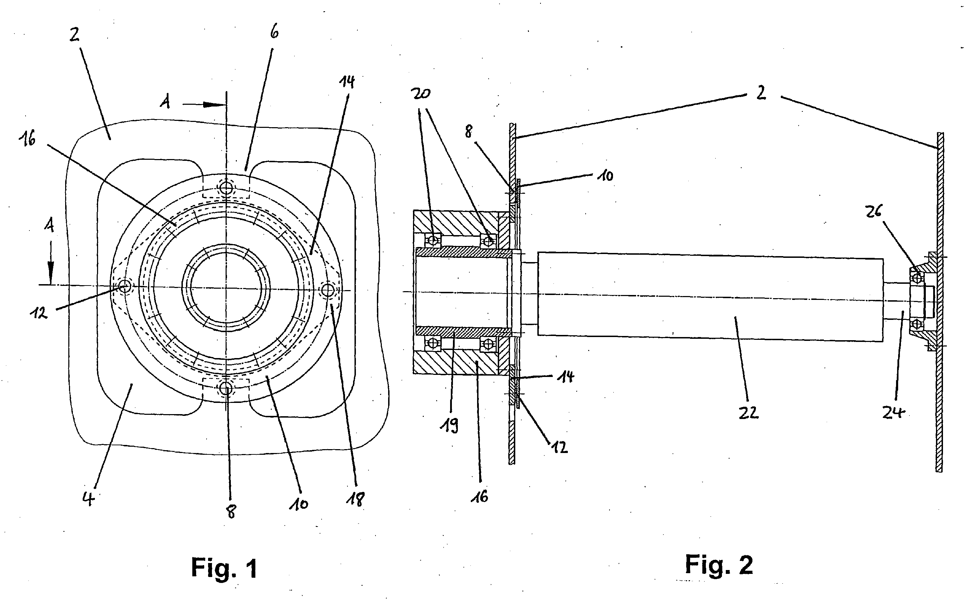

Die in Fig. 1 dargestellte Seitenansicht der Walzenlageranordnung zeigt ein Maschinengestell 2, das eine Öffnung 4 aufweist, in die zwei gegenüberliegende Vorsprünge 6 hineinragen. In den Vorsprüngen 6 sind jeweils Öffnungen zum Einsetzen von nicht dargestellten Schrauben vorgesehen, die als erste Befestigungspunkte 8 zwischen dem Maschinengestell 2 und einem in diesem Beispielsfall ringförmig ausgebildeten Plattenelement 10 dienen. In der dargestellten beispielhaften Anordnung sind die beiden ersten Befestigungspunkte 8 auf einer vertikalen Linie angeordnet. Senkrecht zu dieser gedachten Verbindungslinie verläuft eine gedachte Verbindungslinie zwischen zwei zweiten Befestigungspunkten 12 zwischen dem Plattenelement 10 und einem Kragenelement 14, das in Fig. 1 gestrichelt dargestellt ist und fest mit einem Buchsenelement 16 verbunden ist. Die zweiten Befestigungspunkte 12 liegen dabei auf zwei nach außen abragenden Zungen 18 des ringförmig ausgebildeten Kragenelements 14. Die Verbindung im Bereich der zweiten Befestigungspunkte 12 erfolgt vorzugsweise ebenfalls mittels Verschraubung.

Wie aus Fig. 2 ersichtlich ist, ist das Buchsenelement 16 vorzugsweise als buchsenförmiger Stator eines Torquemotors ausgebildet, der den Rotor 19 des Torquemotors drehbar aufnimmt. Die Lagerung erfolgt vorzugsweise mittels Kugellagern 20. Alternativ hierzu kann das Buchsenelement 16 als Lagerbuchse zur Lagerung eines Walzenzapfens (nicht dargestellt) ausgebildet sein.

Der Rotor 19 des Torquemotors bzw. der Walzenzapfen ist in jedem Fall fest mit dem Walzenkörper der als Hohlwalze ausgebildeten Walze 22 verbunden, wie es bereits aus dem Stand der Technik bekannt ist. Die Verbindung erfolgt beispielsweise mittels Verschraubung, Verschweißung oder mittels einer Gewindeverbindung, wobei auch klebende Verbindungen möglich sind. Die Details hierzu sind in den Zeichnungen nicht dargestellt.

Der Rotor 19 des Torquemotors bzw. der Walzenzapfen ist im eingebauten Zustand durch die Öffnung 4 im Maschinengestell 2, die Mittelöffnung im Kragenelement 14 sowie die Mittelöffnung im Plattenelement 10 hindurch angeordnet und im Buchsenelement 16 drehbar gelagert.

In dieser bevorzugten Ausführungsform ist das Plattenelement 10 als stabiles, aber in gewissem Umfang elastisches Element ausgebildet, das beispielsweise aus einem dünnen Blech (etwa 6 mm), aus Kohlefaser oder aus Kunststoff gebildet sein kann. Das Kragenelement 14 hingegen ist starr ausgebildet und besteht vorzugsweise aus einem dickeren Blech (etwa 12 mm).

Außer dieser Ausführungsform sind noch viele weitere geometrische Ausgestaltungen des erfindungsgemäßen Prinzips für den Fachmann denkbar. Beispielsweise ist es möglich, das Plattenelement 10 aus vier lamellenartig zueinander angeordneten Teilsegmenten zu gestalten, von denen jedes zwischen einem ersten Befestigungspunkt 8 und einem zweiten Befestigungspunkt 12 angeordnet ist.

Es ist auch möglich, dass das Kragenelement 14 als das stabile, aber elastische Element fungiert. Dann kann das Kragenelement 14 auch direkt mit dem Maschinengestell 2 in Verbindung gebracht werden. Vorzugsweise ist aber auch hier ein Plattenelement 10 vorgesehen, das starr ausgebildet ist und in starrer Verbindung mit dem Maschinengestell 2 ist. In diesem Fall sind vorzugsweise auch die Vorsprünge 6 des Maschinengestells stabil, aber elastisch ausgebildet.

Am gegenüberliegenden Walzenende kann entweder eine identische Lageranordnung wie die oben beschriebene vorliegen (nicht dargestellt), oder ein Walzenzapfen 24 ist in einem entsprechenden Lager 26 gelagert, das vorzugsweise als sphärisches Lager oder Gelenklager ausgebildet ist (siehe Fig. 2).

Mit der erfindungsgemäßen Anordnung ergibt sich somit eine konstruktiv einfache, aber besonders widerstandsfähige Lageranordnung, die den Wartungsaufwand auch bei längerem Betrieb minimiert und einen Transport über weite Strecken möglich macht, ohne an Präzision einzubüßen. Die erfindungsgemäße Anordnung ist auch in Achsrichtung der Walze nachgiebig und kann daher als Loslager angesehen werden.

## Patentansprüche

1. Walzenlageranordnung zur drehbaren Lagerung einer Walze (22),
wobei die Walze (22) an einem ersten Walzenende ein sich in Richtung der Walzenachse weiter als der Walzenkörper erstreckendes Verbindungselement, vorzugsweise einen Walzenzapfen oder einen Rotor (19) eines Torquemotors, aufweist, das fest mit dem Walzenkörper verbunden ist, und
wobei das Verbindungselement (19) in einem Buchsenelement (16), vorzugsweise einer Lagerbuchse oder einem buchsenförmigen Stator eines Torquemotors, drehbar gelagert ist, das mit einem Maschinengestell (2) verbunden ist,
**dadurch gekennzeichnet, dass**
die Walzenlageranordnung ein stabiles, aber in gewissem Umfang elastisches Element mit einer Mittelöffnung aufweist, das an ersten Befestigungspunkten (8) fest mit dem Maschinengestell (2) und an zweiten Befestigungspunkten (12) fest mit dem Buchsenelement (16) derart verbunden ist, dass es eine gewisse Beweglichkeit zwischen dem Buchsenelement (16) und dem Maschinengestell (2) bewirkt.

2. Walzenlageranordnung nach Anspruch 1, **dadurch gekennzeichnet, dass** das elastische Element ein vorzugsweise ringförmiges Plattenelement (10) ist.

3. Walzenlageranordnung nach Anspruch 1 oder 2, **dadurch gekennzeichnet, dass** sie ein mit dem Buchsenelement (16) fest verbundenes, im Wesentlichen starres Kragenelement (14) aufweist, das plattenförmig ausgebildet ist und eine Mittelöffnung aufweist.

4. Walzenlageranordnung nach einem der vorangehenden Ansprüche, **dadurch gekennzeichnet, dass** sie zwei erste Befestigungspunkte (8) aufweist, die sich im Wesentlichen gegenüberliegen.

5. Walzenlageranordnung nach einem der vorangehenden Ansprüche, **dadurch gekennzeichnet, dass** sie zwei zweite Befestigungspunkte (12) aufweist, die sich im Wesentlichen gegenüberliegen.

6. Walzenlageranordnung nach Anspruch 4 oder 5, **dadurch gekennzeichnet, dass** eine gedachte Verbindungslinie der ersten Befestigungspunkte (8) einen rechten Winkel mit einer gedachten Verbindungslinie der zweiten Befestigungspunkte (12) einschließt.

7. Walzenlageranordnung nach einem der vorangehenden Ansprüche, **dadurch gekennzeichnet, dass** das Maschinengestell (2) eine Öffnung (4) aufweist, in die zwei gegenüberliegende Vorsprünge (6) hineinragen, wobei die ersten Befestigungspunkte (8) im Bereich der Vorsprünge (6) angeordnet sind.

8. Walzenlageranordnung nach einem der Ansprüche 3 bis 7**, dadurch gekennzeichnet, dass** das Kragenelement (14) ringförmig ausgebildet ist, wobei der Außendurchmesser des Kragenelements (14) kleiner ist als der Außendurchmesser des ringförmigen Plattenelements (10), und wobei das Kragenelement (14) zwei nach außen abragende Zungen (18) aufweist, in deren Bereich die zweiten Befestigungspunkte (12) angeordnet sind.

9. Walzenlageranordnung nach einem der vorangehenden Ansprüche, **dadurch gekennzeichnet, dass** die Verbindung an den ersten und zweiten Befestigungspunkten (8, 12) mittels Schrauben hergestellt ist.

10. Walzenlageranordnung nach einem der vorangehenden Ansprüche, **dadurch gekennzeichnet, dass** das Plattenelement (10) aus einem dünnen Blech, aus Kohlefaser oder Kunststoff besteht.

11. Walzenlageranordnung nach einem der vorangehenden Ansprüche, **dadurch gekennzeichnet, dass** das Kragenelement (14) aus einem dicken Blech besteht.

12. Walzenlageranordnung nach Anspruch 1, **dadurch gekennzeichnet, dass** das elastische Element ein mit dem Buchsenelement fest verbundenes Kragenelement (14) ist, das plattenförmig ausgebildet ist.

13. Walzenlageranordnung nach Anspruch 12, **dadurch gekennzeichnet, dass** sie ein vorzugsweise ringförmiges, starres Plattenelement (10) mit einer Mittelöffnung aufweist, das einerseits mit dem Maschinengestell (2) an elastischen Vorsprüngen (6) desselben und andererseits mit dem elastischen Kragenelement (14) verbunden ist.

14. Walzenlageranordnung nach einem der vorangehenden Ansprüche, **dadurch gekennzeichnet, dass** die Walze (22) eine Hohlwalze aus mit Kohlefaser verstärktem Kunststoff ist.

15. Walzenlageranordnung nach einem der vorangehenden Ansprüche, **dadurch gekennzeichnet, dass** die Walze (22) an einem zweiten Walzenende einen sich in Richtung der Walzenachse weiter als der Walzenkörper erstreckenden Walzenzapfen (24) aufweist, der fest mit dem Walzenkörper verbunden ist und in einem zweiten Lager (26) drehbar gelagert ist, das mit dem Maschinengestell (2) verbunden ist.

16. Walzenlageranordnung nach Anspruch 15, **dadurch gekennzeichnet, dass** das zweite Lager (26) ein sphärisches Lager oder Gelenklager ist.
